# EUROPEAN PATENT APPLICATION

(11) **EP 1 050 927 A2**
(43) Date of publication of application: **08.11.2000**
(21) Application number: 00109407.7
(22) Date of filing: 03.05.2000
(51) Int. Cl.: H01R 3/00

(54) **Connection interface for position sensors**

(30) Priority: 07.05.1999 IT TO990368
(71) Applicant: COGIP S.R.L., 10090 Cascine Vica Rivoli (IT)
(72) Inventor: Teagno, Vladimiro, 10137 Torino (IT)
(74) Representative: Caramelli, Mariella

(57) **Abstract**

A connection interface (1) is described for position sensors (3) for moving mechanical members (5), comprising: a support housing (7) with hooking means (11); luminous displaying means, with driving circuitry, inside the housing (7) that are lighted when they receive a suitable signal from the sensor (3); input and output (35) connection means for the connection to the sensor (3) and to external devices. The interface (1) is adapted to be supported by supports that preferably are the supply pipes (13) of the mechanical members (5). A sensor system is further described comprising the above interface (1).

## Description

The present invention refers to a connection interface for position sensors for moving mechanical members, such as pneumatic and hydraulic cylinders and the like, and to a system comprising such interface.

The use of fluidics is more and more frequent when building industrial plants and machines, with the consequent wide use of pneumatic and hydraulic cylinders. Every mechanical member, handled by pneumatic or hydraulic cylinders, must be controlled through position sensors. For such purpose, almost all pneumatic and hydraulic cylinders are nowadays built in order to embed a magnetic element on their stem, thereby allowing to use sensors, installed outside the cylinder, that are able to detect the moving magnetic field and therefore signal the movement itself or the stem position.

Several types of sensors have been developed and are currently used, from the simple sensors of the REED type to the more sophisticated ones with luminous signalling. These sensors, with different overall dimensions, have always been a problem for the users, due to these overall dimensions. For maintenance reasons, sensors have been created that are equipped with a connector, thereby increasing the dimensions still further, and generating other problems, such as criticalities of components when strong vibrations occur. The sensor with luminous LED (Light Emitting Diode) is particularly useful when assembling and calibrating the cylinder, but also during operation. For compactness reasons, pneumatic and hydraulic cylinders are more and more made integral with the mechanical parts, and therefore the luminous signalling is not always visible. Particularly for pneumatic cylinders, but also for hydraulic cylinders, the trend is towards using small-sized sensors and for such purpose cylinders are being realised with particular outlines, suitable to house the new generation of sensors, the so-called "retractable" sensors.

These sensors surely solve the overall dimensional problem, but create other problems: for example, they do not allow to use connectors any more, and make more and more difficult to view the LED. As regards viewing the LED, no concrete solution proposals have been so far put forward. As regards the connection, the sole proposals have been supplying sensors equipped with a cable about 30 cm long, having at the opposite end a flying connector. This arrangement, apparently valid in practice, is not completely satisfactory, since the connection is under all respects a flying connection that is not very well supported. It must further be stated that the sensors, with luminous signalling, have some electronic components thereinto that are very constrained with respect to the limited dimensions of the new sensors, preventing any possible function variation.

Object of the present invention is solving the above prior-art problems by providing a connection interface between sensor and connection cable.

A further object of the present invention is providing an interface equipped with an integrated connector.

A still further object of the present invention is providing an interface equipped with an anchoring system.

A further object of the present invention is providing a connection interface equipped with luminous signalling that is visible from many sides, doing thereby without the display on sensors for the above-mentioned problems.

The above and other objects and advantages of the invention, as will appear from the following description, are obtained by a connection interface and a system comprising such interface, as claimed in Claims 1 and 16. Preferred embodiments and nontrivial variations of the present invention are claimed in the dependent Claims.

The present invention will be better described by some preferred embodiments thereof, given as a non-limiting example, with reference to the enclosed drawings, in which:

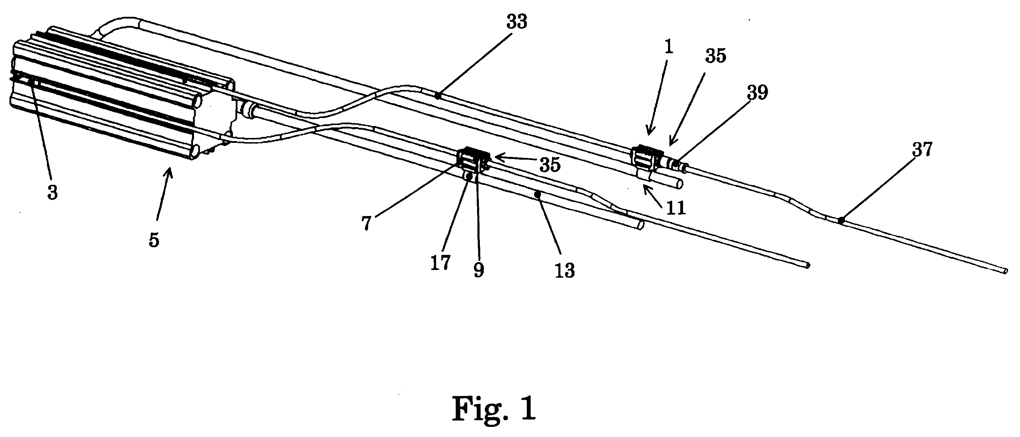

- Figure 1 is a perspective view of an embodiment of a system with connection interface according to the present invention;

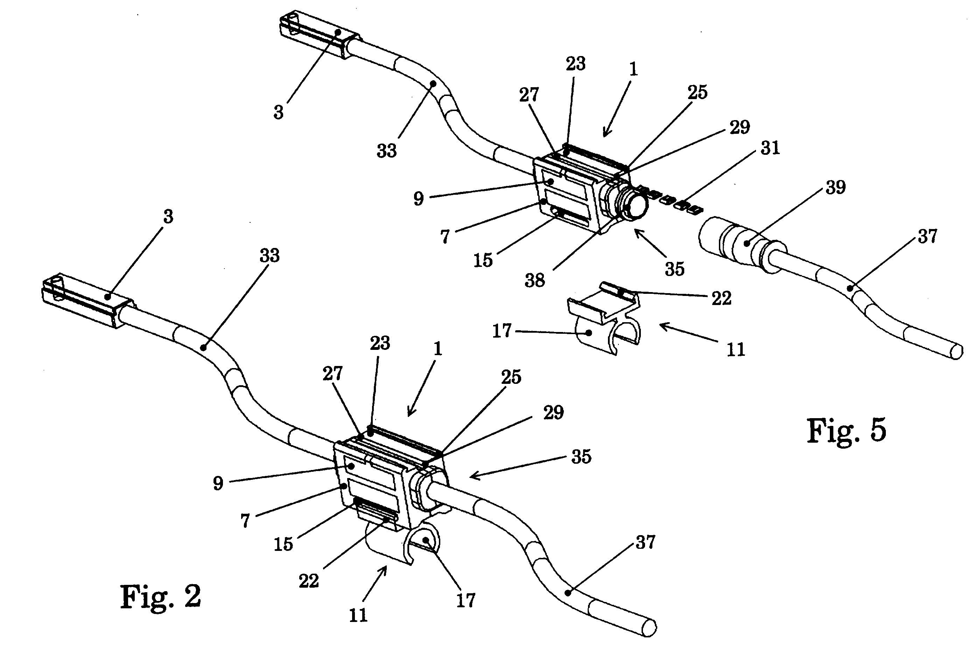

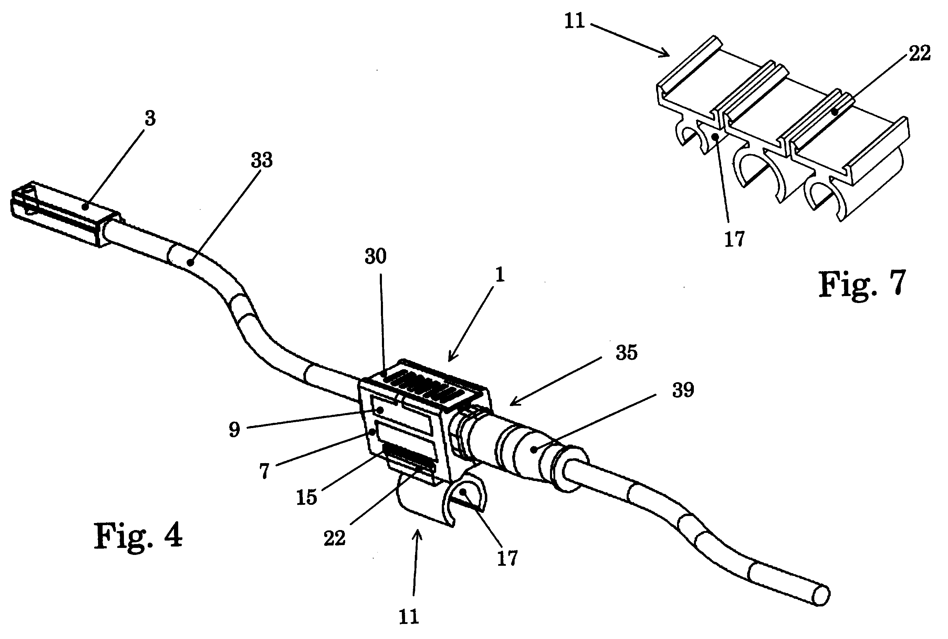

- Figure 2 is a perspective view of a particular variation of the interface in Fig. 1;
- Figure 3 is a perspective view of another particular variation of the interface in Fig. 1;
- Figure 4 is a perspective view of the interface in Fig. 3 with an identification plate assembled thereon;
- Figure 5 is an exploded perspective view of the interface in Fig. 3 pointing out other possible elementary identification plates;
- Figure 6 is a perspective view of an anchoring variation of the interface in Fig. 3; and
- Figure 7 is a perspective view of an embodiment of the hooking means of the interface of the invention.

With reference to the Figures, the connection interface 1 of the present invention is adapted to be connected to a position sensor 3 for moving mechanical members 5, such as pneumatic and hydraulic cylinders and the like. The interface 1 substantially comprises a support housing 7, in the embodiment shown having a box-like shape, made of plastic material and realised by co-molding in two parts, in order to allow its easy coupling when assembling the whole system. The housing 7 is equipped, by co-molding, with a plurality of windows 9 (two of which are shown in the Figures), made of transparent material, placed on at least two sides of the housing 7, to allow transmitting to the outside the light emitted by luminous displaying means (not shown, for example of the LED type) that are present inside the housing 7. Such LEDs are activated when a signal is present that is coming from the sensor 3, and the light emitted by them can thereby be easily viewed by an operator during installation or operation. The displaying means are controlled by a suitable control circuitry (placed inside the housing 7 and not shown in the drawings) that, among the different functions required by the application, controls the transmission of transducer signals towards external downstream devices, to perform the adequate actions.

The interface 1 of the invention further comprises hooking means 11 connected to the housing 7; such hooking means allow securing the interface 1 to the supply pipe 13 of the cylinder 5, that is always present in every plant, usually in a number equal to two. By using the pipe 13 as support (but in a similarly efficient way, it could be possible to secure the interface 1 to a wall or a place, obviously using adequate hooking means), an unmovable and safe positioning of the interface 1 is allowed, thereby avoiding the prior art problems of flying interfaces.

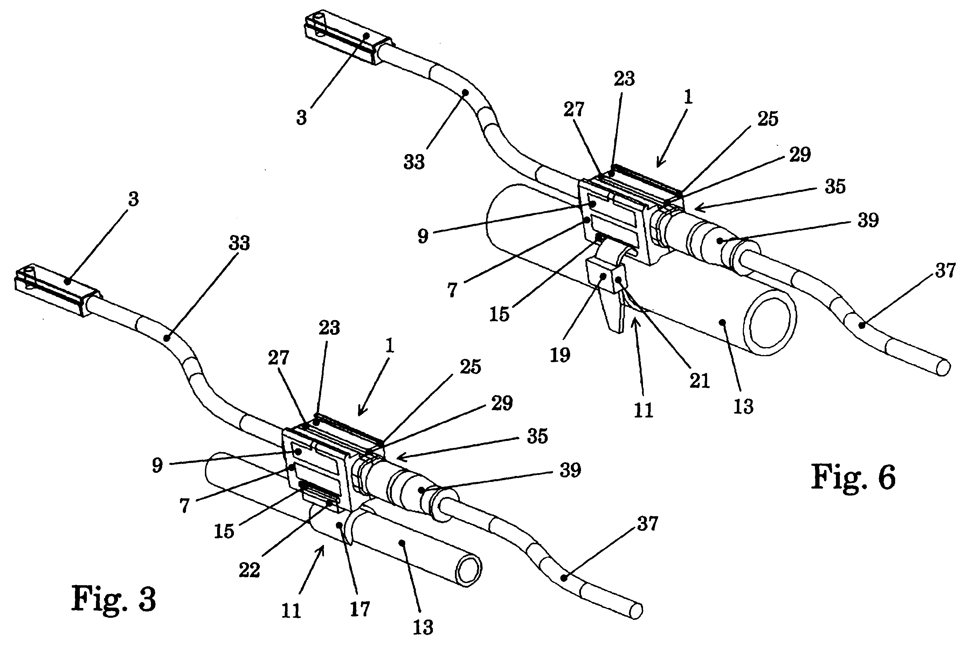

The Figures show some embodiments of the hooking means 11, according to the application choices. First of all, it is possible to realise the hooking means in a single piece with the housing 7, for example through molding, or it is possible to snappingly insert the hooking means 11 into the housing 7 by using suitable slits 15. It is obviously possible to secure the hooking means 11 to the housing 7 by using other common securing means, such as screws, rivets, etc. Moreover, it is possible to realise the hooking means 11 as half-ring-shaped snapping elements 17 (shown in Fig.s 1 to 5 and in detail in Fig. 7) that are adapted to be secured to the pipes 13, or as common hose clamps 19 (Fig. 6) with related closing block 21. The half-ring-shaped elements 17 of Fig. 7 are equipped on their top part with hooking teeth 22 for being secured to the respective slits 15 of the housing 7.

The housing 7 is further equipped with a groove 23 with side stopping teeth 25 and with a groove 27 with side stopping teeth 29: such grooves 23 and 27 are adapted to house respective big 30 or small 31 identification plates (that can be coupled in series, as better shown in Fig. 5) to identify the interface 1 when installing it into the plant.

The interface 1 further comprises input connection means (not shown) adapted to allow the connection of the interface 1 to the sensor 3; such input connection means are adapted to receive thereinto, in a fixed and unmovable way, an input cable 33, that in a first arrangement can be pre-wired when realising the interface 1; alternatively, the input connection means can be composed of a common connector (not shown) to be coupled with a similar connector of cable 33.

Similarly, the interface 1 comprises output connection means 35 adapted to allow the connection of the interface 1 to external devices; such output connection means 35 are adapted to receive thereinto, in a fixed and unmovable way, an output cable 37, that in a first arrangement can be pre-wired when realising the interface 1 (as shown in Fig.s 1 and 2); alternatively, the output connection means 35 can be composed of a common connector 38 to be coupled with a similar connector 39 for cable 37 (as shown in Fig.s 1 and 3-6).

As can be understood by the drawings and the description, and as already seen, the major characteristic of the interface 1 of the invention is therefore that it is adapted, through hooking means 11, to be supported by supply pipes 13 of cylinder 5 to guarantee the sensor functionalities being provided in an easier way to be controlled, but in a similar "solid" way, outside the limited spaces that a plant of this type can have. Therefore, the invention provides the final realisation of a sensor system real and proper for moving mechanical members, such as pneumatic and hydraulic cylinders and the like, composed of the real sensor 3, of the input cable 33, of the above-described interface 1 and of the output cable 37, the whole system using the supply pipes 13, or other support means, for a more linear and efficient arrangement into the plant.

Through the above-described arrangement, it will be possible for the end user, during installation or operation, to view, in a comfortable position that is far from the cylinder 5, the signals emitted by the position sensor 3, or by any sensor, even of the non-magnetic type, connected to the interface 1 of the invention, and to carry out the adequate actions according to the results (for example, it will be possible to use the LED turning-on signal to control a certain actuation of a clean contact).

## Claims

1. Connection interface (1) for a position sensor (3) for moving mechanical members (5), such as pneumatic and hydraulic cylinders and the like, characterised in that it comprises:
- a support housing (7);
- hooking means (11) connected to said housing (7);
- luminous displaying means placed inside said housing (7) and adapted to be lighted when they receive a suitable signal from said sensor (3);
- a driving circuitry for said displaying means, said circuitry being placed inside said housing (7);
- input connection means adapted to allow the connection of said interface (1) to said sensor (3);
- output connection means (35) adapted to allow the connection of said interface (1) to external devices;
- said interface (1) being adapted, through said hooking means (11), to be supported by support means (13).

2. Connection interface (1) according to Claim 1, characterised in that said support means (13) are composed of one of the supply pipes (13) of said moving mechanical member (5).

3. Connection interface (1) according to Claim 1, characterised in that said support means are composed of a wall or a plane to which said interface (1) is secured.

4. Connection interface (1) according to Claim 1, characterised in that said luminous displaying means are composed of at least one LED (Light Emitting Diode).

5. Connection interface (1) according to Claim 1, characterised in that said housing (7) is made of plastic material and is co-molded with windows (9) made of transparent material adapted to allow transmitting to the outside the light emitted by said LED inside said housing.

6. Connection interface (1) according to Claim 1, characterised in that said housing (7) is adapted to allow displaying the light emitted by said luminous displaying means at least from two of its sides through windows (9).

7. Connection interface (1) according to Claim 1, characterised in that said hooking means (11) are made integrally with said housing (7) through molding.

8. Connection interface (1) according to Claim 1, characterised in that said hooking means (11) are secured to said housing (7) through securing means (15, 22).

9. Connection interface (1) according to Claim 1, characterised in that said hooking means (11) are composed of half-ring-shaped snapping elements (17) for different diameters of the pipe (13).

10. Connection interface (1) according to Claim 1, characterised in that said hooking means (11) are composed of a hose clamp (19) with related closing block (21).

11. Connection interface (1) according to Claim 1, characterised in that said input connection means and said output connection means (35) are adapted to receive thereinto a respective input cable (33) and a respective output cable (37) that are fixedly pre-wired therein.

12. Connection interface (1) according to Claim 1, characterised in that said output connection means (35) are composed of a connector (38) to be coupled with a respective connector (39) of the output cable (37).

13. Connection interface (1) according to Claim 1, characterised in that said input connection means are composed of a connector to be coupled with a respective connector of the input cable (33).

14. Connection interface (1) according to Claim 1, characterised in that said interface (1) is further equipped with an identification plate (30) adapted to be housed into a groove (23) of said housing (7) and to be kept thereinto by stopping teeth (25).

15. Connection interface (1) according to Claim 1, characterised in that said interface (1) is further equipped with a plurality of small identification plates (31) that can be coupled in series and are adapted to be housed into a groove (27) of said housing (7) and to be kept thereinto by stopping teeth (29).

16. Connection system for position sensors (3) for moving mechanical members (5), comprising:
- at least one sensor (3);
- at least one interface (1) according to any one of the previous Claims, said interface (1) being equipped with at least one input cable (33), connected to said at least one sensor (3), and with at least one output cable (37) connected to external devices.
